# EUROPÄISCHE PATENTSCHRIFT

(11) **EP 1 329 644 B1**
(45) Veröffentlichungstag und Bekanntmachung des Hinweises auf die Patenterteilung: **07.06.2006**
(21) Anmeldenummer: 03000914.6
(22) Anmeldetag: 16.01.2003
(51) Int. Cl.: F16F 9/36

(54) **Verstellelement mit einem Zylinder**
Adjusting element with cylinder
Elément de réglage avec cylindre

(30) Priorität: 22.01.2002 DE 10202415; 19.12.2002 DE 10259417
(43) Veröffentlichungstag der Anmeldung: 23.07.2003
(73) Patentinhaber: Stabilus GmbH, D-56070 Koblenz (DE)
(72) Erfinder: Reiser, Alexander, Dr., 56072 Koblenz (DE)
(74) Vertreter: Klein, Thomas

(56) Entgegenhaltungen:
- DE-A- 2 457 938
- DE-A- 4 101 567
- DE-A- 4 216 573
- DE-C- 19 535 711
- US-A- 6 086 059

## Beschreibung

Die Erfindung bezieht sich auf ein Verstellelement mit einem Zylinder, dessen Innenraum ein unter Druck stehendes Medium enthält, mit einem in dem Zylinder verschiebbar angeordneten Kolben, der eine Kolbenstange aufweist, die an einem Ende des Zylinders aus dem Zylinder herausragt, mit einer die Kolbenstange umschließenden Ringdichtung, die mit ihrem inneren radial umlaufenden Umfang an der Kolbenstange und mit ihrem äußeren radial umlaufenden Umfang an der Innenwand des Zylinders dichtend in Anlage ist, auf ihrer dem Innenraum zugewandten Seite von dem Druck des Mediums beaufschlagt ist und mit ihrer dem Innenraum abgewandten Seite an einem Abstützelement abgestützt ist, welches sich wiederum mit seinem der Ringdichtung abgewandten Ende an einem Teil des Zylinders abstützt, wobei das Abstützelement bei Überschreitung einer bestimmten Anlagekraft der Ringdichtung an dem Abstützelement aus einer Normalposition in eine Überlastposition etwa teleskopartig seine axiale Länge im Zylinder verringernd verformbar ist, wodurch eine Durchtrittsöffnung vom Innenraum des Zylinders zur Umgebung herstellbar ist.

Bei derartigen Verstellelementen, die vorzugsweise Gasfedern sind, ist der mit dem Medium gefüllte Innenraum bei Überschreitung eines bestimmten Innendrucks im Zylinder mit der Umgebung verbindbar, um einen zu hohen Innendruck im Zylinder zu vermeiden. Ein zu hoher Innendruck der z.B. im Falle eines Brandes in der Umgebung des Verstellelements durch Temperaturerhöhung oder aber auch durch Deformation entstehen kann, kann zu einer Zerstörung des Zylinders oder zu einem Herausdrücken der Kolbenstange aus dem Zylinder führen.

Gasfedern dieser Art können z.B. pneumatische Verstellelemente zur leichten Handhabung für die Kofferraumklappe bzw. die Motorhaube eines Kraftfahrzeugs sein, die einen Gewichtsausgleich der verstellten Teile bilden.

Ein Verstellelement der eingangs genannten Art ist aus der DE 41 01 567 bekannt. Bei Überschreitung der bestimmten Anlagekraft der Ringdichtung an dem Abstützelement, wird die Ringdichtung zur Austrittsöffnung der Kolbenstange aus dem Zylinder hin verschoben und damit eine Bohrung im Zylinder freigegeben, über die der Innenraum des Zylinders mit der Umgebung verbunden wird, so daß das im Zylinder enthaltene Medium in die Umgebung entweichen kann. Dabei ist von Nachteil, daß durch die Bohrung Feuchtigkeit in den Zylinder eintreten kann, was zu Korrosion führt.

Ein weiteres bekanntes Verstellelement (DE 24 57 938 C2) weist eine Sollbruchstelle auf, die bei Überbeanspruchung bricht, so daß das im Innenraum des Zylinders enthaltene Gas nach außen entweichen kann. Diese Sollbruchstelle kann an der Zylinderwand oder an der mit einer nach außen verschlossenen Koaxialbohrung versehenen Kolbenstange ausgebildet sein. Bei Überschreiten eines bestimmten Berstdruckes im Zylinder, können die an der Sollbruchstelle abgetrennten Teile umherfliegen und Schäden verursachen.

Aus der DE 195 35 711 C1 ist ein Verstellelement bekannt, das einen als Hülse ausgebildeten Anschlag für den Kolben aufweist, der die Auswärtsbewegung von Kolben und Kolbenstange begrenzt. Die Hülse besteht aus einem oberhalb einer bestimmten Temperatur schmelzbaren Material. Kommt es zu einer Erhöhung der Temperatur über die bestimmte Temperatur hinaus, so schmilzt die Hülse und der Kolben kann sich weiter nach außen verschieben. Dabei wird ein die Ringdichtung umgehender Bypass nach außen geschaffen, über den das im Zylinder enthaltene Gas entweichen kann. Dieser Bypass wird durch eine Querschnittsverjüngung der Kolbenstange gebildet, die aber zu einer Schwächung der Kolbenstange führt.

Aufgabe der Erfindung ist es, ein Verstellelement der eingangs genannten Art zu schaffen, das diese Nachteile vermeidet und das bei einer Druckerhöhung im Innenraum des Zylinders über einen bestimmten Innendruck hinaus zu einer sicheren Druckentlastung des Innenraums führt, sowie mit wenigen einfachen Bauteilen aufgebaut ist.

Diese Aufgabe wird erfindungsgemäß dadurch gelöst, daß das Abstützelement ein in dem Zylinder angeordnetes erstes Teil und ein damit verbundenes, aus der Normalposition in die Überlastposition zum ersten Teil hin bewegbares zweites Teil aufweist, an dem die Ringdichtung in Anlage ist, wobei an dem ersten Teil ein Anschlag mit seinem einen Ende abstützbar ist, der in der Normalposition das zweite Teil axial zur Erstreckung des Zylinders zumindest bis nahe der Ringdichtung durchragt.

Diese Aufgabe wird ebenfalls dadurch gelöst, daß das Abstützelement ein in dem Zylinder angeordnetes erstes Teil und ein damit verbundenes, aus der Normalposition in die Überlastposition zum ersten Teil hin bewegbares zweites Teil aufweist, an dem die Ringdichtung in Anlage ist, wobei der das erste Teil bildende erste Rohrabschnitt an einer Stirnwand des Zylinders axial abgestützt ist, die eine Durchtrittsöffnung aufweist, durch die die Kolbenstange aus dem Zylinder herausragt und wobei an der Stirnwand ein Anschlag mit seinem einen Ende abstützbar ist, der in der Normalposition das zweite Teil axial zur Erstreckung des Zylinders zumindest bis nahe der Ringdichtung durchragt.

Eine Öffnung der vom Innenraum des Zylinders zur Umgebung führenden Durchtrittsöffnung erfolgt nur in Abhängigkeit von dem Innendruck im Zylinder, unabhängig davon, wie dieser überhöhte Innendruck zustende kam. Dies kann sowohl durch Überhitzung in einem Brandfall oder durch mechanische Deformierung des Zylinders sein.

Durch Verschiebung des bewegbaren Teils des Abstützelements und damit Verringern der axialen Länge des Abstützelements wird die Ringdichtung an zumindest einer Stelle von dem Anschlag so beaufschlagt, daß es zumindest zu einem Abheben der Ringdichtung von der Innenwand des Zylinders oder von der Kolbenstange kommt, wenn nicht sogar zu einer Beschädigung der Ringdichtung. Damit wird eine Durchtrittsöffnung vom Innenraum des Zylinders zu einem mit der Umgebung verbundenen Bereich geschaffen, die ein Ausströmen des unter Druck stehenden Mediums, insbesondere eines Gases, aus dem Innenraum des Zylinders in die Umgebung ermöglicht und so den Druck im Zylinder abbaut.

Schwächungen an Zylinderwand oder Kolbenstange sowie große nach außen führende Öffnungen werden vermieden.

In der Normalposition können auf einfache Weise das erste und das zweite Teil durch eine kraftschlüssige Verbindung oder durch eine formschlüssige Verbindung miteinander verbunden sein, die durch Überschreitung der bestimmten Anlagekraft der Ringdichtung lösbar ist.

Eine weitere, ebenfalls einfach aufgebaute und bauteilarme Möglichkeit besteht darin, daß das erste und das zweite Teil in der Normalposition über eine Sollbruchstelle miteinander verbunden sind, die durch Überschreitung der bestimmten Anlagekraft der Ringdichtung aufbrechbar ist.

Weist die Ringdichtung eine an der Kolbenstange anliegende innere Dichtlippe und/oder eine an der Innenwand des Zylinders anliegende äußere Dichtlippe auf, wobei der Anschlag sich axial zur inneren und/oder äußeren Dichtlippe hin erstreckt, so wird die Ringdichtung von dem Anschlag an einer leicht verformbaren oder zerstörbaren Stelle beaufschlagt, so daß es bei einem Überschreiten des bestimmten Innendrucks im Zylinder zu einem schnellen Druckabbau kommt.

Damit zwar die Dichtlippen flexibel, die Basis der Ringdichtung aber formstabil ist, kann die Ringdichtung einen Stabilisierungsring aus einem Material geringerer Flexibilität als dem Material der Ringdichtung aufweisen, an dem der Anschlag radial innen und/oder radial außen vorbeibewegbar ist.

Der Anschlag kann ein stiftartiger Stößel sein, der die Ringdichtung an einer Stelle beaufschlagt.

Ist der Anschlag eine ringartig die Kolbenstange umgebende Hülse, so wird die Ringdichtung an ihrem gesamten Umfang beaufschlagt, was zu einer sofortigen großen Durchtrittsöffnung und somit einem besonders schnellen Druckabbau führt.

Vorzugweise ist der Anschlag an dem ersten Teil befestigt.

Um zu einer weiteren Reduzierung der Bauteile zu gelangen und den Montageaufwand noch weiter zu reduzieren, kann der Anschlag einteilig mit dem ersten Teil ausgebildet sein.

Zu einem einfach ausgebildeten, bauteilarmen und leicht montierbaren Aufbau führt es, wenn das erste und/oder das zweite Teil Rohrabschnitte bilden, die in der Normalposition zumindest weitgehend axial hintereinander angeordnet und an ihren einander zugewandten Endbereichen miteinander verbunden sind, wobei diese Verbindung bei Überschreitung der bestimmten Anlagekraft der Ringdichtung lösbar und die Rohrabschnitte teleskopartig ineinander schiebbar sind.

Ist das Abstützelement mit zumindest einem Teil seiner radial umlaufenden äußeren Mantelfläche an der Innenwand des Zylinders und mit zumindest einem Teil seiner radial umlaufenden inneren Mantelfläche an der Kolbenstange in Anlage und bildet eine Kolbenstangenführung, so erfüllt das Abstützelement eine Doppelfunktion.

Um breite Abstützflächen für die Ringdichtung und/oder zur Axialabstützung zu bilden, können das erste und/oder das zweite Teil des Abstützelements an seinem dem jeweils anderen Teil abgewandten Ende einen radial sich erweiternden und/oder radial verringernden Kragen besitzen.

Zur axialen Abstützung des Abstützelements kann der das erste Teil bildende erste Rohrabschnitt an einer Stirnwand des Zylinders axial abgestützt sein, die eine Durchtrittsöffnung aufweist, durch die die Kolbenstange aus dem Zylinder herausragt.
Ist dabei der das erste Teil bildende erste Rohrabschnitt der äußere Teil und der das zweite Teil bildende zweite Rohrabschnitt der innere Teil des Teleskops, wobei der Außendurchmesser des zweiten Rohrabschnitts kleiner als der Durchmesser der Durchtrittsöffnung ist, so kann bei einem teleskopischen Einfahren des zweiten Teils in den ersten Teil der zweite Teil mit seinem einen Endbereich durch die Durchtrittsöffnung nach außen ragen. Dies ermöglicht eine axial kurze Ausbildung des ersten Teils und damit auch eine axial kürzere Ausbildung des Verstellelements.

Ausführungsbeispiele der Erfindung sind in der Zeichnung dargestellt und werden im folgenden näher beschrieben. Es zeigen
- Figur 1: einen Ausschnitt einer Seitenansicht eines ersten Ausführungsbeispiels eines Verstellelements in Normalposition im Schnitt
- Figur 2: das Verstellelement nach Figur 1 in der Überlastposition
- Figur 3: einen Ausschnitt einer Seitenansicht eines zweiten Ausführungsbeispiels eines Verstellelements in Normalposition im Schnitt
- Figur 4: das Verstellelement nach Figur 3 in der Überlastposition
- Figur 5: einen Ausschnitt einer Seitenansicht eines dritten Ausführungsbeispiels eines Verstellelements in Normalposition im Schnitt
- Figur 6: das Verstellelement nach Figur 5 in der Überlastposition
- Figur 7: einen Ausschnitt einer Seitenansicht eines vierten Ausführungsbeispiels eines Verstellelements in Normalposition im Schnitt
- Figur 8: das Verstellelement nach Figur 7 in der Überlastposition
- Figur 9: einen Ausschnitt einer Seitenansicht eines fünften Ausführungsbeispiels eines Verstellelements in Normalposition im Schnitt
- Figur 10: das Verstellelement nach Figur 9 in der Überlastposition
- Figur 11: eine Stirnansicht des Abstützelements des Verstellelements nach Figur 1
- Figur 12: eine Seitenansicht des Abstützelements des Verstellelements nach Figur 1 im Schnitt
- Figur 13: eine Stirnansicht eines sechsten Ausführungsbeispiels eines Verstellelements
- Figur 14: eine Seitenansicht des Abstützelements des Verstellelements nach Figur 13 im Schnitt
- Figur 15: einen Ausschnitt einer Seitenansicht eines siebten Ausführungsbeispiels eines Verstellelements in Normalposition im Schnitt
- Figur 16: einen Ausschnitt einer Seitenansicht eines achten Ausführungsbeispiels eines Verstellelements in Normalposition im Schnitt.

Das in den Figuren dargestellte Verstellelement besitzt einen rohrartigen Zylinder 1, dessen Wandung an dem einen Ende des Zylinders 1 zu einer Stirnwand 2 umgebördelt ist. Koaxial zur Längserstreckung des Zylinders 1 ist in der Stirnwand 2 eine durchgehende Durchtrittsöffnung 3, 3' ausgebildet.

In dem Zylinder 1 ist ein nicht dargestellter Kolben verschiebbar angeordnet, der eine Kolbenstange 4 besitzt, die durch die Durchtrittsöffnung 3, 3' nach außen ragt.

Die Kolbenstange 4 ist von einer Ringdichtung 5 umschlossen, die mit ihrer radial umlaufenden inneren Dichtlippe 6 an der Kolbenstange 4 und mit ihrer radial umlaufenden äußeren Dichtlippe 7 an der Innenwand des Zylinders 1 in Anlage ist. Die Dichtlippen 6 und 7 sind auf der dem Innenraum 8 des Zylinders 1 zugewandten Seite der Ringdichtung 5 angeordnet und werden durch ein im Innenraum 8 befindliches, unter Druck stehendes Gas gegen die Kolbenstange 4 bzw. die Innenwand des Zylinders 1 beaufschlagt.

Zur Stabilisierung der Ringdichtung 5 besitzt diese an ihrer dem Innenraum 8 abgewandten Seite einen eingesetzten Ring 9 aus einem Material geringerer Flexibilität als dem Material der Ringdichtung 5.

Mit ihrer dem Innenraum 8 abgewandten ringförmigen Fläche ist die von dem Gasdruck beaufschlagte Ringdichtung 5 an einem Abstützelement 10 abgestützt. Dieses Abstützelement 10 besteht aus einem als Rohrabschnitt ausgebildeten ersten Teil 11, 11', das mit seiner radial umlaufenden äußeren Mantelfläche an der Innenwand des Zylinders 1 in Anlage und mit seiner der Stirnwand 2 zugewandten Stirnfläche an der Stirnwand 2 abgestützt ist.

An seinem der Stirnwand 2 abgewandten Endbereich ist das erste Teil 11, 11' radial nach innen über eine unter Krafteinwirkung lösbare Verbindung 12 mit einem Endbereich eines ebenfalls als Rohrabschnitt ausgebildeten zweiten Teils 13 des Abstützelements 10 verbunden, wobei der Außendurchmesser des Rohrabschnitts des zweiten Teils 13 etwas geringer ist als der Innendurchmesser des Rohrabschnitts des ersten Teils 11, 11'. Die innere radial umlaufende Mantelfläche des zweiten Teils 13 umschließt die Kolbenstange 4 und bildet eine Führungsbuchse der Kolbenstange 4.

An dem zum Innenraum 8 hin ragenden anderen Ende ist das zweite Teil 13 mit einem radial sich erweiternden Kragen 14 ausgebildet, dessen radial äußere umlaufende Mantelfläche an der Innenwand des Zylinders 1 anliegt und verschiebbar geführt ist. Somit bildet der zweite Teil 13 eine Axialführung der Kolbenstange 4 im Zylinder 1.

An der zum Innenraum 8 gerichteten Ringfläche des Kragens 14 ist die Ringdichtung 5 abgestützt.

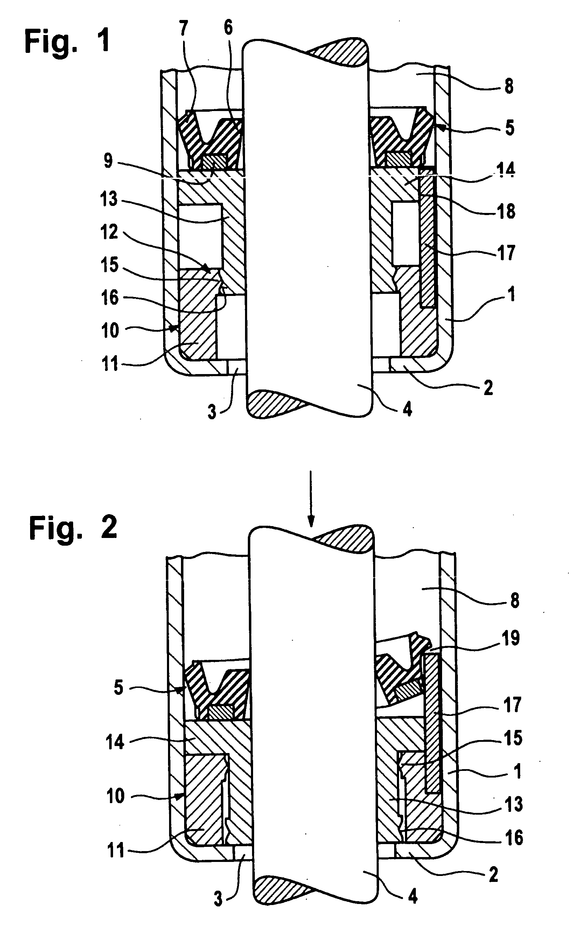

Die Verbindung 12 besteht aus einem von der inneren Mantelfläche des ersten Teils 11 nach innen hervorstehenden radial umlaufenden Ringwulst 15 oder Ringansatz 24, der in der in den Figuren 1,3, 15 und 16 dargestellten Normalposition in eine entsprechende radial umlaufende Ringnut 16 an der äußeren Mantelfläche des Rohrabschnitts des zweiten Teils 13 hinragt und mit dieser eine Rastverbindung bildet.

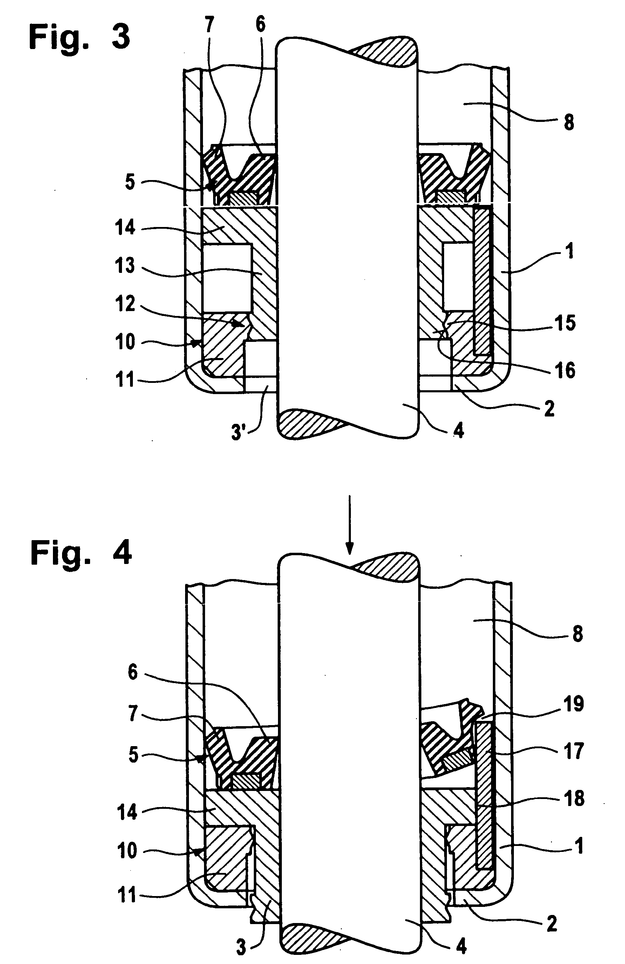

Diese Rastverbindung ist so ausgelegt, daß sie bei einer Überschreitung einer bestimmten Anlagekraft der durch den Gasdruck gegen das zweite Teil 13 beaufschlagten Ringdichtung 5 an dem zweiten Teil 13 ausrastet, so daß wie in den Figuren 2 und 4 dargestellt, sich der Rohrabschnitt des zweiten Teils 13 aus der Normalposition teleskopartig in das Innere des ersten Teils 11, 11' hinein in eine Überlastposition verschiebt, bis der Kragen 14 an dem ersten Teil 11, 11' zur Anlage kommt.

Ein an dem ersten Teil 11 mit seinem einen Ende fest angeordneter stiftartiger Stößel 17, der sich axial zur Ringdichtung 5 hin erstreckt, ragt in der in den Figuren 1 und 3 dargestellten Normalposition durch eine axial durchgehende Ausnehmung 18 im Kragen 14 bis nahe an die Ringdichtung 5 im Bereich deren äußerer Dichtlippe 7 heran.

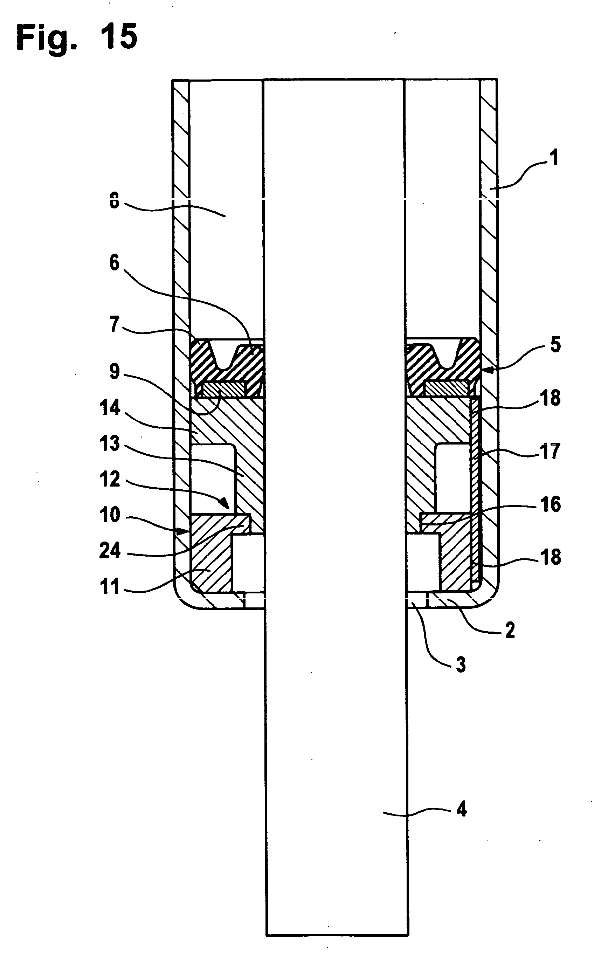

In Figur 15 ist an dem radial äußeren Mantelbereich des ersten Teils 11' und des zweiten Teils 13 in einer axial durchgehenden Ausnehmung 18 ein stiftartiger Stößel 17 angeordnet, der sich axial zur Ringdichtung 5 hin erstreckt und in der dargestellten Normalposition bis nahe an die Ringdichtung 5 im Bereich deren äußerer Dichtlippe 7 heranragt. Mit seinem anderen Ende ist der Stößel 17 an der Stirnwand 2 abgestützt.

Durch die teleskopartige Verschiebung des zweiten Teils 13 in den ersten Teil 11, 11' wird die Ringdichtung 5 im Bereich ihrer äußeren Dichtlippe 7 von dem Stößel 17 derart beaufschlagt, daß im Bereich des Stößels 17 die Dichtlippe 7 von dem Kragen 14 und von der Innenwand des Zylinders 1 abhebt und eine Durchtrittsöffnung 19 von dem Innenraum 8 zu der dem Innenraum 8 abgewandten Seite der Ringdichtung hergestellt wird.

In der Überlastposition kann über diese Durchtrittsöffnung 19 und die Spalte zwischen der Kolbenstange 4 und dem ersten Teil 11 sowie zwischen dem ersten Teil 11, 11' und dem zweiten Teil 13 nun das Gas aus dem Innenraum 8 zur Durchtrittsöffnung 3, 3' und von dort in die Umgebung entweichen. Damit wird der Gasdruck im Innenraum 8 abgebaut.

Durch die unterschiedliche Bestimmung der Rastkraft der Verbindung 12 kann festgelegt werden, bei welchem Gasdruck im Innenraum 8 und somit bei welcher Anlagekraft der Ringdichtung 5 am Abstützelement 10 ein Kurzschluß des Innenraums 8 mit der Umgebung erfolgen soll.

Das Ausführungsbeispiel der Figuren 3 und 4 entspricht weitgehend dem Ausführungsbeispiel der Figuren 1 und 2. Unterschiedlich ist der Durchmesser der Durchtrittsöffnung 3'. Dieser ist größer als der Außendurchmesser des Rohrabschnitts des zweiten Teils 13, so daß dieses in der Überlastposition durch die Durchtrittsöffnung 3' nach außen ragen kann. Dadurch kann das erste Teil 11 und somit auch der Zylinder 1 mit einer geringeren Länge ausgebildet werden.

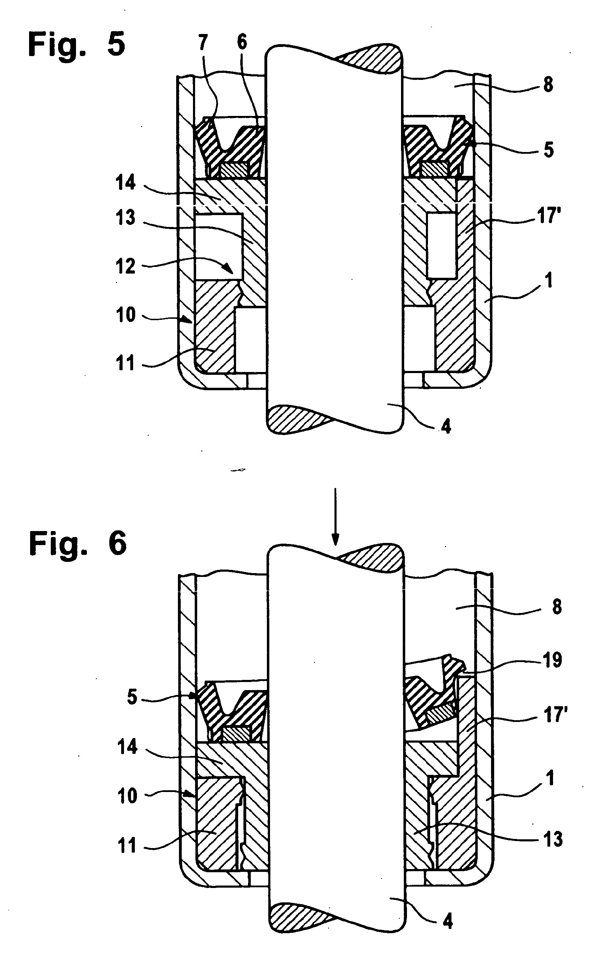

Das in den Figuren 5 und 6 dargestellte Ausführungsbeispiel eines Verstellelements entspricht weitestgehend dem in den Figuren 1 und 2 dargestellten Ausführungsbeispiel. Der einzige Unterschied besteht darin, daß der einen Anschlag bildende stiftartige Stößel 17' einteilig mit dem ersten Teil 11' ausgebildet ist.

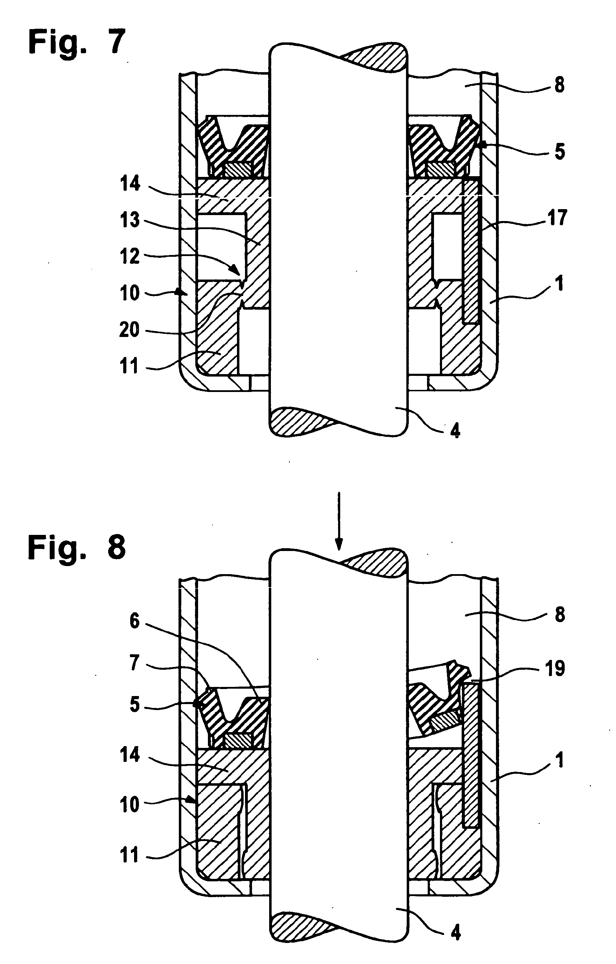

Auch das Ausführungsbeispiel der Figuren 7 und 8 entspricht weitestgehend dem in den Figuren 1 und 2 dargestellten Ausführungsbeispiel. Im Unterschied dazu besteht die Verbindung 12 aus einer Sollbruchstelle 20, die durch Überschreitung einer bestimmten Anlagekraft der durch den Gasdruck gegen das zweite Teil 13 beaufschlagten Ringdichtung 5 aufbricht, so daß sich der Rohrabschnitt des zweiten Teils 13 teleskopartig in das Innere des ersten Teils 11 hineinverschiebt (Figur 8).

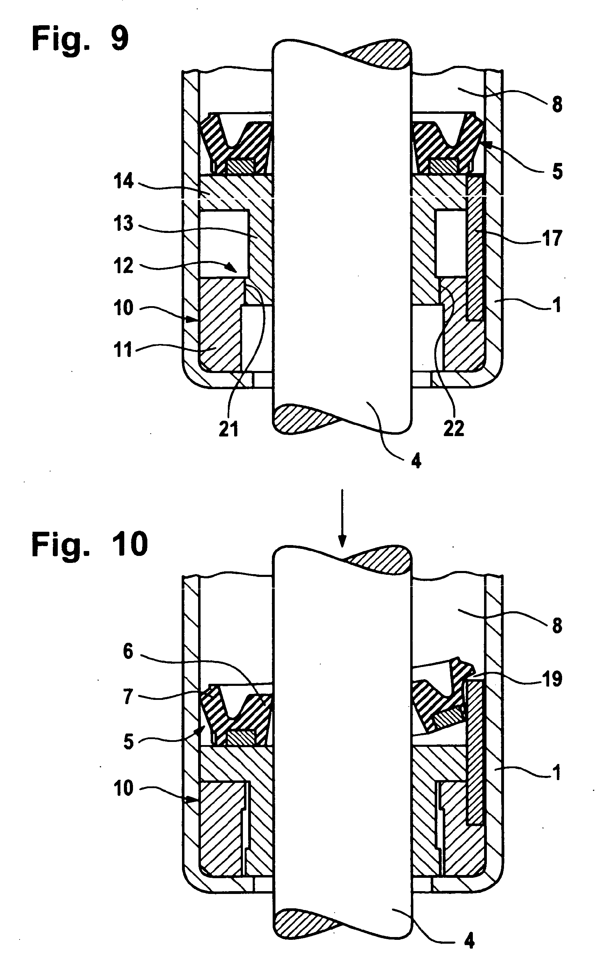

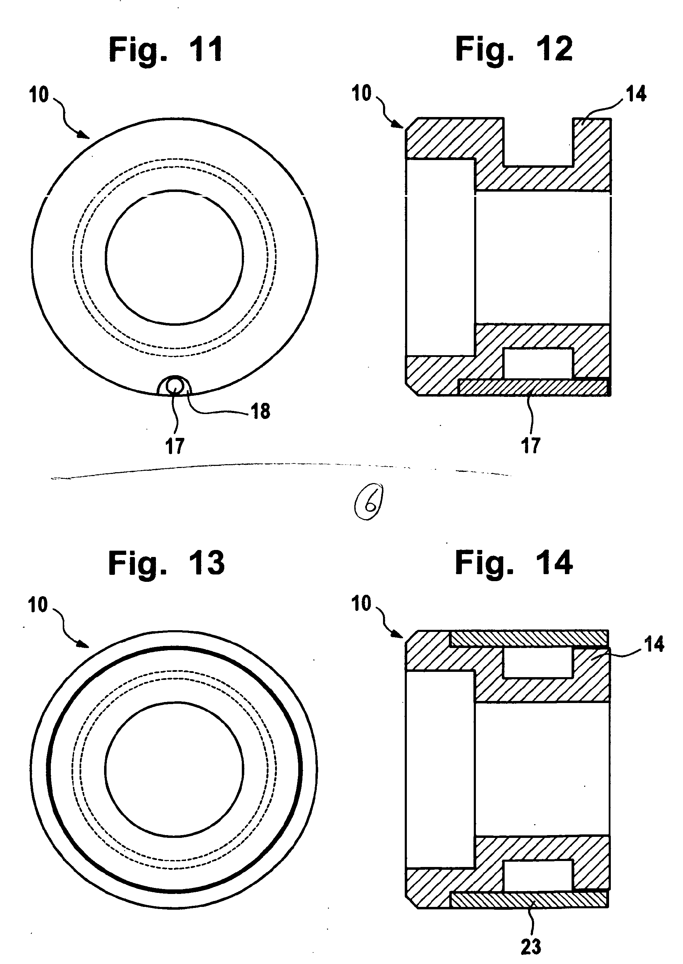

In den Figuren 9 und 10 ist die Verbindung 12 eine kraftschlüssige Verbindung, bei der die innere Mantelfläche des ersten Teils 11 eine radial umlaufende Ringfläche 21 aufweist, von der eine entsprechende radial umlaufende Ringfläche 22 an der äußeren Mantelfläche des Rohrabschnitts des zweiten Teils 13 kraftschlüssig umschlossen ist. Bei Überschreitung einer bestimmten Anlagekraft der durch den Gasdruck gegen das zweite Teil 13 beaufschlagten Ringdichtung 5 wird der Kraftschluß zwischen den Ringflächen 21 und 22 überwunden und der Rohrabschnitt des zweiten Teils 13 verschiebt sich teleskopartig in das Innere des ersten Teils 11 hinein (Figur 10).

Die Figuren 13 und 14 zeigen eine alternative Ausbildung des Anschlags zu dem in den Figuren 11 und 12 dargestellten Stößel 17. Dabei bildet eine ringartige Hülse 23 den Anschlag. Die Hülse 23 ist mit ihrem einen Ende an dem ersten Teil 11 fest angeordnet und erstreckt sich, das zweite Teil 13 mit Spiel umschließend, axial zur Ringfläche 5 hin bis nahe an die Ringdichtung 5 im Bereich der äußeren Dichtlippe 7 heran.

Durch die teleskopartige Verschiebung des zweiten Teils 13 in den ersten Teil 11 wird die Ringdichtung 5 im Bereich ihrer äußeren Dichtlippe 7 von der Hülse 23 derart beaufschlagt, daß die Dichtlippe 7 entlang ihrer ganzen radial umlaufenden Länge von dem Kragen 14 und von der Innenwand des Zylinders 1 abhebt und sofort eine große Durchtrittsöffnung von dem Innenraum des Zylinders zu der dem Innenraum abgewandten Seite der Ringdichtung herstellt.

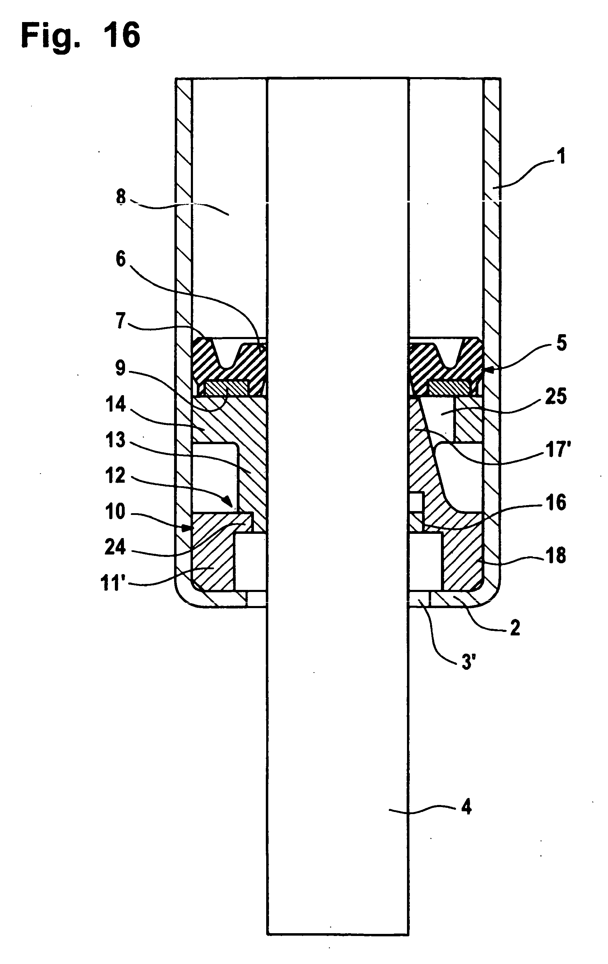

Das Ausführungsbeispiel der Figur 16 entspricht weitgehend dem Ausführungsbeispiel der Figur 15. Im Unterschied zu Figur 15 ist der Stößel 17' einteilig mit dem ersten Teil 11' ausgebildet und so mit dem ersten Teil 11' an der Stirnwand 2 abgestützt. Er ragt durch eine axiale Ausnehmung 25 im zweiten Teil 13 dornartig axial zur Ringdichturig 5 hin, wobei er in der dargestellten Normalposition mit seinem freien Ende bis nahe an die Ringdichtung 5 im Bereich von deren innerer Dichtlippe 6 heranragt.

Durch die teleskopartige Verschiebung des zweiten Teils 13' in den ersten Teil 11' wird die Ringdichtung 5 radial innerhalb des Rings 9 im Bereich ihrer inneren Dichtlippe 6 von dem Stößel 17' derart beaufschlagt, daß im Bereich des Stößels 17' die Dichtlippe 6 von dem Kragen 14 und von der Innenwand des Zylinders 1 abhebt und wie in Figur 15 eine Durchtrittsöffnung von dem Innenraum 8 zu der dem Innenraum 8 abgewandten Seite der Ringdichtung 5 sowie zur Umgebung hergestellt wird.

### Bezugszeichenliste

- 1: Zylinder
- 2: Stirnwand
- 3: Durchtrittsöffnung
- 3': Durchtrittsöffnung
- 4: Kolbenstange
- 5: Ringdichtung
- 6: innere Dichtlippe
- 7: äußere Dichtlippe
- 8: Innenraum
- 9: Ring
- 10: Abstützelement
- 11: erster Teil
- 11': erster Teil
- 12: Verbindung
- 13: zweiter Teil
- 14: Kragen
- 15: Ringwulst
- 16: Ringnut
- 17: Stößel
- 17': Stößel
- 18: Ausnehmung
- 19: Durchtrittsöffnung
- 20: Sollbruchstelle
- 21: Ringfläche
- 22: Ringfläche
- 23: Hülse
- 24: Ringansatz
- 25: Ausnehmung

## Patentansprüche

1. Verstellelement mit einem Zylinder (1), dessen Innenraum (8) ein unter Druck stehendes Medium enthält mit einem in dem Zylinder verschiebbar angeordneten Kolben, der eine Kolbenstange (4) aufweist, die an einem Ende des Zylinders aus dem Zylinder (1) herausragt, mit einer die Kolbenstange (4) umschließenden Ringdichtung (5), die mit ihrem inneren radial umlaufenden Umfang an der Kolbenstange (4) und mit ihrem äußeren radial umlaufenden Umfang an der Innenwand des Zylinders (1) dichtend in Anlage ist, auf ihrer dem Innenraum (8) zugewandten Seite von dem Druck des Mediums beaufschlagt ist und mit ihrer dem Innenraum (8) abgewandten Seite an einem Abstützelement (10) abgestützt ist, welches sich wiederum mit seinem der Ringdichtung (5) abgewandten Ende an einem Teil des Zylinders (1) abstützt, wobei das Abstützelement (10) bei Überschreitung einer bestimmten Anlagekraft der Ringdichtung (5) an dem Abstützelement (10) aus einer Normalposition in eine Überlastposition etwa teleskopartig seine axiale Länge im Zylinder (1) verringernd verformbar ist, wodurch eine Durchtrittsöffnung (3, 3') vom Innenraum (8) des Zylinders (1) zur Umgebung herstellbar ist, **dadurch gekennzeichnet, daß** das Abstützelement (10) ein in dem Zylinder (1) angeordnetes erstes Teil (11, 11') und ein damit verbundenes, aus der Normalposition in die Überlastposition zum ersten Teil (11, 11') hin bewegbares zweites Teil (13) aufweist, an dem die Ringdichtung (5) in Anlage ist, wobei an dem ersten Teil (11) ein Anschlag (17, 17') mit seinem einen Ende abstützbar ist, der in der Normalposition das zweite Teil (13) axial zur Erstreckung des Zylinders (1) zumindest bis nahe der Ringdichtung (5) durchragt.

2. Verstelleinrichtung nach dem Oberbegriff des Anspruchs 1, **dadurch gekennzeichnet, daß** das Abstützelement (10) ein in dem Zylinder (1) angeordnetes erstes Teil (11, 11') und ein damit verbundenes, aus der Normalposition in die Überlastposition zum ersten Teil (11, 11') hin bewegbares zweites Teil (13, 13') aufweist, an dem die Ringdichtung (5) in Anlage ist, wobei der das erste Teil (11, 11') bildende erste Rohrabschnitt an einer Stirnwand (2) des Zylinders (1) axial abgestützt ist, die eine Durchtrittsöffnung (3) aufweist, durch die die Kolbenstange (4) an dem Zylinder (1) herausragt und wobei an der Stirnwand (2) ein Anschlag (17, 17') mit seinem einen Ende abstützbar ist, der in der Normalposition das zweite Teil (13, 13') axial zur Erstreckung des Zylinders (1) zumindest bis nahe der Ringdichtung (5) durchragt.

3. Verstellelement nach einem der vorhergehenden Ansprüche, **dadurch gekennzeichnet, daß** das erste und das zweite Teil in der Normalposition durch eine kraftschlüssige Verbindung miteinander verbunden sind, die durch Überschreitung der bestimmten Anlagekraft der Ringdichtung lösbar ist.

4. Verstellelement nach einem der Ansprüche 1 und 2, **dadurch gekennzeichnet, daß** das erste und das zweite Teil (11, 11', 13) in der Normalposition durch eine formschlüssige Verbindung (12) miteinander verbunden sind, die durch Überschreitung der bestimmten Anlagekraft der Ringdichtung (5) lösbar ist.

5. Verstellelement nach einem der Ansprüche 1 und 2, **dadurch gekennzeichnet, daß** das erste und das zweite Teil in der Normalposition über eine Sollbruchstelle miteinander verbunden sind, die durch Überschreitung der bestimmten Anlagekraft der Ringdichtung aufbrechbar ist.

6. Verstellelement nach einem der vorhergehenden Ansprüche, **dadurch gekennzeichnet, daß** die Ringdichtung (5) eine an der Kolbenstange (4) anliegende innere Dichtlippe (6) und/oder eine an der Innenwand des Zylinders (1) anliegende äußere Dichtlippe (7) aufweist und daß der Anschlag sich axial zur inneren und/oder äußeren Dichtlippe hin erstreckt.

7. Verstelleinrichtung nach Anspruch 6, **dadurch gekennzeichnet, daß** die Ringdichtung (5) einen Stabilisierungsring (9) aus einem Material geringerer Flexibilität als dem Material der Ringdichtung (5) aufweist, an dem der Anschlag radial innen und/oder radial außen vorbeibewegbar ist.

8. Verstellelement nach einem der vorhergehenden Ansprüche, **dadurch gekennzeichnet, daß** der Anschlag ein insbesondere aus Stahl bestehender, stiftartiger Stößel (17) ist.

9. Verstellelement nach einem der Ansprüche 1 bis 7, **dadurch gekennzeichnet, daß** der Anschlag eine ringartig die Kolbenstange umgebende Hülse ist.

10. Verstellelement nach einem der vorhergehenden Ansprüche, **dadurch gekennzeichnet, daß** der Anschlag an dem ersten Teil (11) befestigt ist.

11. Verstellelement nach einem der Ansprüche 1 bis 9, **dadurch gekennzeichnet, daß** der Anschlag einteilig mit dem ersten Teil ausgebildet ist.

12. Verstellelement nach einem der vorhergehenden Ansprüche, **dadurch gekennzeichnet, daß** das erste und/oder das zweite Teil (11, 11', 13) Rohrabschnitte bilden, die in der Normalposition zumindest weitgehend axial hintereinander angeordnet und an ihren einander zugewandten Endbereichen miteinander verbunden sind, wobei diese Verbindung (12) bei Überschreitung der bestimmten Anlagekraft der Ringdichtung (5) lösbar und die Rohrabschnitte teleskopartig ineinander schiebbar sind.

13. Verstellelement nach einem der vorhergehenden Ansprüche, **dadurch gekennzeichnet, daß** das Abstützelement (10) mit zumindest einem Teil seiner radial umlaufenden äußeren Mantelfläche an der Innenwand des Zylinders (1) und mit zumindest einem Teil seiner radial umlaufenden inneren Mantelfläche an der Kolbenstange (4) in Anlage ist und eine Kolbenstangenführung bildet.

14. Verstellelement nach den Ansprüchen 12 und 13, **dadurch gekennzeichnet, daß** das erste und/oder das zweite Teil (13) des Abstützelements (10) an seinem dem jeweils anderen Teil abgewandten Ende einen radial sich erweiternden und/oder radial verringernden Kragen (14) besitzt.

15. Verstellelement nach einem der Ansprüche 12 bis 14, **dadurch gekennzeichnet, daß** der das erste Teil (11, 11')) bildende erste Rohrabschnitt an einer Stirnwand (2) des Zylinders (1) axial abgestützt ist, die eine Durchtrittsöffnung (3, 3') aufweist, durch die die Kolbenstange (4) aus dem Zylinder (1) herausragt.

16. Verstellelement nach einem der Ansprüche 12 und 13, **dadurch gekennzeichnet, daß** das erste und/oder das zweite Teil (13, 13') des Abstützelements (10) an seinem dem jeweils anderen Teil abgewandten Ende einen radial sich erweiternden und/oder radial verringernden Kragen (14) besitzt.

17. Verstellelement nach Anspruch 15, **dadurch gekennzeichnet, daß** der das erste Teil (11, 11') bildende erste Rohrabschnitt der äußere Teil und der das zweite Teil (13) bildende zweite Rohrabschnitt der innere Teil des Teleskops ist, wobei der Außendurchmesser des zweiten Rohrabschnitts kleiner als der Durchmesser der Durchtrittsöffnung (3') ist.

## Claims

1. Adjusting element having a cylinder (1), the interior space (8) of which contains a pressurized medium, having a piston which is arranged displaceably in the cylinder and has a piston rod (4) which protrudes out of the cylinder (1) at one end of the cylinder, having an annular seal (5) which surrounds the piston rod (4) and, with its inner, radially encircling circumference, bears in a sealing manner against the piston rod (4) and, with its outer, radially encircling circumference, bears in a sealing manner against the inner wall of the cylinder (1), is acted upon, on its side facing the interior space (8), by the pressure of the medium and, with its side facing away from the interior space (8), is supported on a supporting element (10), which, in turn, with its end facing away from the annular seal (5), is supported on part of the cylinder (1), it being possible for the supporting element (10), when a certain bearing force of the annular seal (5) against the supporting element (10) is exceeded, to be deformed somewhat telescopically, reducing its axial length in the cylinder (1), from a normal position into an overload position, as a result of which a passage opening (3, 3') from the interior space (8) of the cylinder (1) to the surroundings can be produced, **characterized in that** the supporting element (10) has a first part (11, 11') which is arranged in the cylinder (1) and a second part (13) which is connected to the first part, can be moved from the normal position toward the first part (11, 11') into the overload position and against which the annular seal (5) bears, it being possible for one end of a stop (17, 17') to be supported on the first part (11), said stop, in the normal position, protruding through the second part (13) axially in order to extend the cylinder (1) at least until close to the annular seal (5).

2. Adjusting element according to the preamble of Claim 1, **characterized in that** the supporting element (10) has a first part (11, 11') which is arranged in the cylinder (1) and a second part (13, 13') which is connected to the first part, can be moved from the normal position toward the first part (11, 11') into the overload position and against which the annular seal (5) bears, the first tube section, which forms the first part (11, 11'), being supported axially on an end wall (2) of the cylinder (1), said end wall having a passage opening (3) through which the piston rod (4) protrudes out of the cylinder (1), and it being possible for one end of a stop (17, 17') to be supported on the end wall (2), said stop, in the normal position, protruding through the second part (13, 13') axially in order to extend the cylinder (1) at least until close to the annular seal (5).

3. Adjusting element according to one of the preceding claims, **characterized in that** the first and second parts are connected to each other in the normal position by a frictional connection which can be released by exceeding the defined bearing force of the annular seal.

4. Adjusting element according to either of Claims 1 and 2, **characterized in that** the first and second parts (11, 11', 13) are connected to each other in the normal position by a form-fitting connection (12) which can be released by exceeding the defined bearing force of the annular seal (5).

5. Adjusting element according to either of Claims 1 and 2, **characterized in that** the first and second parts are connected to each other in the normal position via a predetermined breaking point which can be broken open by exceeding the defined bearing force of the annular seal.

6. Adjusting element according to one of the preceding claims, **characterized in that** the annular seal (5) has an inner sealing lip (6) bearing against the piston rod (4) and/or an outer sealing lip (7) bearing against the inner wall of the cylinder (1), and **in that** the stop extends axially toward the inner and/or outer sealing lip.

7. Adjusting element according to Claim 6, **characterized in that** the annular seal (5) has a stabilizing ring (9) made of a material which is less flexible than the material of the annular seal (5) past which the stop can be moved radially on the inside and/or radially on the outside.

8. Adjusting element according to one of the preceding claims, **characterized in that** the stop is a pin-like ram (17) consisting, in particular, of steel.

9. Adjusting element according to one of Claims 1 to 7, **characterized in that** the stop is a sleeve annularly surrounding the piston rod.

10. Adjusting element according to one of the preceding claims, **characterized in that** the stop is fixed on the first part (11).

11. Adjusting element according to one of Claims 1 to 9, **characterized in that** the stop is formed integrally with the first part.

12. Adjusting element according to one of the preceding claims, **characterized in that** the first and/or the second part (11, 11', 13) form tube sections which, in the normal position, are at least largely arranged axially one behind the other and are connected to each other at their mutually facing end regions, it being possible for this connection (12) to be released when the defined bearing force of the annular seal (5) is exceeded and for the tube sections to be pushed telescopically into each other.

13. Adjusting element according to one of the preceding claims, **characterized in that** the supporting element (10) bears with at least part of its radially encircling, outer circumferential surface against the inner wall of the cylinder (1) and with at least part of its radially encircling, inner circumferential surface against the piston rod (4) and forms a piston rod guide.

14. Adjusting element according to Claims 12 and 13, **characterized in that** the first and/or the second part (13) of the supporting element (10) has, at its end facing away from the other part in each case, a radially expanding and/or radially decreasing collar (14).

15. Adjusting element according to one of Claims 12 to 14, **characterized in that** the first tube section forming the first part (11, 11')) is supported axially on an end wall (2) of the cylinder (1), said end wall having a passage opening (3, 3') through which the piston rod (4) protrudes out of the cylinder (1).

16. Adjusting element according to either of Claims 12 and 13, **characterized in that** the first and/or the second part (13, 13') of the supporting element (10) has, at its end facing away from the other part in each case, a radially expanding and/or radially decreasing collar (14).

17. Adjusting element according to Claim 15, **characterized in that** the first tube section forming the first part (11, 11') is the outer part, and the second tube section forming the second part (13) is the inner part of the telescope, with the outside diameter of the second tube section being smaller than the diameter of the passage opening (3').

## Revendications

1. Élément de déplacement, avec un cylindre (1) dont l'espace intérieur (8) contient un fluide sous pression, avec un piston qui est disposé à déplacement dans le cylindre et qui présente une tige de piston (4) qui dépasse hors du cylindre (1) à une extrémité du cylindre, avec un joint d'étanchéité annulaire (5) qui entoure la tige de piston (4), qui est en application étanche contre la tige de piston (4) par sa circonférence intérieure radialement entourante et contre la paroi intérieure du cylindre (1) par sa circonférence extérieure radialement entourante, qui est sollicité par la pression du fluide sur son côté tourné vers l'espace intérieur (8) et qui, par son côté opposé à l'espace intérieur (8), est soutenu sur un élément de soutien (10) qui s'appuie lui-même sur une partie du cylindre (1) par son extrémité opposée au joint d'étanchéité annulaire (5), sachant que l'élément de soutien (10), en cas de dépassement d'une force donnée d'application du joint d'étanchéité annulaire (5) contre l'élément de soutien (10), peut être déformé d'une manière environ télescopique d'une position normale dans une position de surcharge, en réduisant sa longueur axiale dans le cylindre (1), de sorte qu'une ouverture de passage (3, 3') menant de l'espace intérieur (8) du cylindre (1) à l'environnement peut être formée, **caractérisé en ce que** l'élément de soutien (10) présente une première partie (11, 11') disposée dans le cylindre (1) et une deuxième partie (13) reliée à la première, pouvant être déplacée en direction de la première partie (11, 11') de la position normale dans la position de surcharge et contre laquelle s'applique le joint d'étanchéité annulaire (5), sachant qu'une butée (17, 17') peut être soutenue par l'une de ses extrémités sur la première partie (11), butée qui, dans la position normale, traverse la deuxième partie (13) axialement - par rapport à l'étendue du cylindre (1) - au moins jusqu'à proximité du joint d'étanchéité annulaire (5).

2. Élément de déplacement selon le préambule de la revendication 1, **caractérisé en ce que** l'élément de soutien (10) présente une première partie (11, 11') disposée dans le cylindre (1) et une deuxième partie (13, 13') reliée à la première, pouvant être déplacée en direction de la première partie (11, 11') de la position normale dans la position de surcharge et contre laquelle s'applique le joint d'étanchéité annulaire (5), sachant que le premier tronçon de tube constituant la première partie (11, 11') est soutenu axialement sur une paroi frontale (2) du cylindre (1) qui présente une ouverture de passage (3) par laquelle la tige de piston (4) dépasse hors du cylindre (1), et sachant qu'une butée (17, 17') peut être soutenue par l'une de ses extrémités sur la paroi frontale (2), butée qui, dans la position normale, traverse la deuxième partie (13, 13') axialement - par rapport à l'étendue du cylindre (1) - au moins jusqu'à proximité du joint d'étanchéité annulaire (5).

3. Élément de déplacement selon l'une quelconque des revendications précédentes, **caractérisé en ce que** la première et la deuxième parties sont, dans la position normale, mutuellement reliées par une liaison par friction qui peut être défaite par le dépassement de la force donnée d'application du joint d'étanchéité annulaire.

4. Élément de déplacement selon l'une quelconque des revendications 1 et 2, **caractérisé en ce que** la première et la deuxième parties (11, 11', 13) sont, dans la position normale, mutuellement reliées par une liaison positive (12) qui peut être défaite par le dépassement de la force donnée d'application du joint d'étanchéité annulaire (5).

5. Élément de déplacement selon l'une quelconque des revendications 1 et 2, **caractérisé en ce que** la première et la deuxième parties sont, dans la position normale, mutuellement reliées par l'intermédiaire d'une zone de rupture privilégiée qui peut être rompue par le dépassement de la force donnée d'application du joint d'étanchéité annulaire.

6. Élément de déplacement selon l'une quelconque des revendications précédentes, **caractérisé en ce que** le joint d'étanchéité annulaire (5) présente une lèvre d'étanchéité intérieure (6) appliquée contre la tige de piston (4) et/ou une lèvre d'étanchéité extérieure (7) appliquée contre la paroi intérieure du cylindre (1), et **en ce que** la butée s'étend axialement en direction de la lèvre d'étanchéité intérieure et/ou extérieure.

7. Élément de déplacement selon la revendication 6, **caractérisé en ce que** le joint d'étanchéité annulaire (5) présente une bague de stabilisation (9) en un matériau de flexibilité inférieure au matériau du joint d'étanchéité annulaire (5), bague le long de laquelle la butée peut être déplacée radialement à l'intérieur et/ou radialement à l'extérieur.

8. Élément de déplacement selon l'une quelconque des revendications précédentes, **caractérisé en ce que** la butée est un poussoir (17) du genre broche, réalisé notamment en acier.

9. Élément de déplacement selon l'une quelconque des revendications 1 à 7, **caractérisé en ce que** la butée est une douille entourant annulairement la tige de piston.

10. Élément de déplacement selon l'une quelconque des revendications précédentes, **caractérisé en ce que** la butée est fixée sur la première partie (11).

11. Élément de déplacement selon l'une quelconque des revendications 1 à 9, **caractérisé en ce que** la butée est réalisée d'un seul tenant avec la première partie.

12. Élément de déplacement selon l'une quelconque des revendications précédentes, **caractérisé en ce que** la première et/ou la deuxième parties (11, 11', 13) forment des tronçons de tube qui, dans la position normale, sont disposés au moins pour l'essentiel en succession axiale et sont reliés entre eux par leurs régions terminales en vis-à-vis, sachant que cette liaison (12) peut être défaite en cas de dépassement de la force donnée d'application du joint d'étanchéité annulaire (5) et que les tronçons de tube peuvent être poussés télescopiquement l'un dans l'autre.

13. Élément de déplacement selon l'une quelconque des revendications précédentes, **caractérisé en ce que** l'élément de soutien (10) est en application contre la paroi intérieure du cylindre (1) par au moins une partie de sa surface circonférentielle extérieure radialement entourante et contre la tige de piston (4) par au moins une partie de sa surface circonférentielle intérieure radialement entourante, et constitue un guide de tige de piston.

14. Élément de déplacement selon les revendications 12 et 13, **caractérisé en ce que** la première et/ou la deuxième partie (13) de l'élément de soutien (10) possède, à son extrémité opposée à l'autre partie respective, un collet (14) s'élargissant radialement et/ou diminuant radialement.

15. Élément de déplacement selon l'une quelconque des revendications 12 à 14, **caractérisé en ce que** le premier tronçon de tube constituant la première partie (11, 11') est soutenu axialement sur une paroi frontale (2) du cylindre (1) qui présente une ouverture de passage (3, 3') par laquelle la tige de piston (4) dépasse hors du cylindre (1).

16. Élément de déplacement selon l'une quelconque des revendications 12 et 13, **caractérisé en ce que** la première et/ou la deuxième partie (13, 13') de l'élément de soutien (10) possède, à son extrémité opposée à l'autre partie respective, un collet (14) s'élargissant radialement et/ou diminuant radialement.

17. Élément de déplacement selon la revendication 15, **caractérisé en ce que** le premier tronçon de tube constituant la première partie (11, 11') est la partie extérieure de l'élément télescopique et le deuxième tronçon de tube constituant la deuxième partie (13) en est la partie intérieure, sachant que le diamètre extérieur du deuxième tronçon de tube est inférieur au diamètre de l'ouverture de passage (3').
